# EUROPÄISCHE PATENTSCHRIFT

(11) **EP 1 705 075 B1**
(45) Veröffentlichungstag und Bekanntmachung des Hinweises auf die Patenterteilung: **12.03.2008**
(21) Anmeldenummer: 05006139.9
(22) Anmeldetag: 21.03.2005
(51) Int. Cl.: B60R 21/20

(54) **Lenkradanordnung**
Steering wheel assembly
Assemblage du volant

(43) Veröffentlichungstag der Anmeldung: 27.09.2006
(73) Patentinhaber: Delphi Technologies, Inc., Troy, MI 48007 (US)
(72) Erfinder: Marotzke, Thomas, 16562 Bergfelde (DE); Ortmann, Sven, 15370 Fredersdorf (DE)
(74) Vertreter: Manitz, Finsterwald & Partner GbR

(56) Entgegenhaltungen:
- EP-A- 1 103 430
- EP-A- 1 314 620
- EP-A- 1 354 772
- DE-U1- 29 908 967
- GB-A- 2 383 301
- US-A- 5 380 037
- US-B1- 6 196 573

## Beschreibung

Die Erfindung betrifft eine Lenkradanordnung für Kraftfahrzeuge mit einem Lenkrad und einem Airbagmodul, das mit dem Lenkrad lösbar verbindbar ist.

Bei der Herstellung von bekannten Lenkradeinheiten mit Airbagmodulen wird ein erheblicher Aufwand betrieben, um das Airbagmodul einerseits lösbar und andererseits so am Lenkrad zu fixieren, dass die geforderten Passtoleranzen eingehalten werden. Besonders kritisch ist dies bei so genannten floating-horn-Systemen, bei denen das Airbagmodul zur Betätigung der Fahrzeughupe dient und dazu in Richtung der Lenkradachse beweglich - d.h. "schwimmend" - am Lenkrad fixiert wird. Zudem wird häufig eine Vielzahl von Einzelteilen benötigt, was die Kosten und den Montageaufwand weiter erhöht.

Aus EP 1103430A1 ist eine Befestigung eines Airbagmoduls an einem Lenkrad bekannt, bei der Vorsprünge des Airbagmoduls mit einem am Lenkrad angebrachten Stahldraht zusammenwirken.

Aufgabe der Erfindung ist es, eine Lenkradanordnung der eingangs genannten Art zu schaffen, bei der die Fixierung des Airbagmoduls am Lenkrad möglichst schnell und einfach und insbesondere unter Einhaltung minimaler Passtoleranzen durchführbar ist, wobei dies insbesondere auch bei Integration eines floating-horn-Mechanismus möglich sein soll.

Die Lösung der Aufgabe erfolgt durch die Merkmale des Anspruchs 1.

Erfindungsgemäß ist zur einfachen Montage und Demontage des Airbagmoduls ein Schnellrastmechanismus vorgesehen, der wenigstens ein sich parallel zur Lenkradachse erstreckendes, bevorzugt hakenartig ausgebildetes Rastelement und ein Verriegelungselement umfasst, das in der Montagestellung des Airbagmoduls das Rastelement verriegelnd hintergreift, wobei das Rastelement am Airbagmodul angebracht und das Verriegelungselement am Lenkrad fixiert ist, wobei als Verriegelungselement eine senkrecht zur Lenkradachse orientierte Feder vorgesehen ist, die bei einer in Richtung der Lenkradachse erfolgenden Relativbewegung zwischen Airbagmodul und Lenkrad mittels des Rastelementes aus einer Verriegelungsstellung auslenkbar ist und bei Erreichen der Montagestellung des Airbagmoduls von selbst in die Verriegelungsstellung zurückkehrt, und wobei die Feder an der dem Airbagmodul zugewandten Oberseite des Lenkrades angeordnet ist, wobei Federschenkel mittels des Rastelementes auseinander drückbar sind.

Vorzugsweise ist die Feder auf einem Nabenteller des Lenkrades angeordnet.

Durch den erfindungsgemäßen Schnellrastmechanismus, der auch als "Snap-In-Mechanismus" bezeichnet wird, ist zur Fixierung des Airbagmoduls am Lenkrad lediglich eine Relativbewegung zwischen den beiden Baugruppen in Richtung der Lenkradachse erforderlich. Außerdem werden mit dem Rastelement einerseits und dem als Feder ausgebildeten Verriegelungselement andererseits lediglich zwei Bauteile für den Schnellrastmechanismus benötigt. Ferner ermöglicht das erfindungsgemäße Verbindungsprinzip zum einen eine zumindest nahezu spielfreie Fixierung des Airbagmoduls am Lenkrad und zum anderen eine exakte Positionierung in einer senkrecht zur Lenkradachse verlaufenden Ebene. Aufgrund des erfindungsgemäßen Konstruktionsprinzips lassen sich die Komponenten des Schnellrastmechanismus problemlos so aufeinander abstimmen, dass diese Spielfreiheit und exakte Positionierung ohne Einbußen bei der Handhabung im Sinne einer einfachen und schnellen Montage und Demontage gewährleistet sind.

Dadurch, dass erfindungsgemäß die Feder auf der dem Airbagmodul zugewandten Oberseite des Lenkrades bzw. auf einem Nabenteller des Lenkrades angeordnet ist, lassen sich Toleranzen in besonders vorteilhafter Wiese reduzieren. Dies gilt insbesondere dann, wenn es sich bei dem Lenkrad um ein Druckgussteil handelt, das mit Hilfe einer zweigeteilten Form hergestellt wird. Die Ausgestaltungen des Lenkrades bzw. des Nabentellers zur Aufnahme/Fixierung der Feder liegen erfindungsgemäß dann ausnahmslos oberhalb der Trennebene zwischen den beiden Formhälften, d.h. als Toleranzen in Richtung der Lenkradachse (z-Richtung) sind nur die Toleranzen der oberen Formhälfte zu berücksichtigen. Der zu einer beträchtlichen Erhöhung der z-Toleranz führende Übergang zwischen den beiden Formhälften kommt erfindungsgemäß also nicht zum Tragen. Hierdurch lässt sich eine enorm hohe Passgenauigkeit mit minimalen Toleranzen erzielen.

Vorteilhafte Weiterbildungen der Erfindung ergeben sich auch aus den abhängigen Ansprüchen, der Beschreibung sowie der Zeichnung.

Bevorzugt umfasst der Schnellrastmechanismus eine Mehrzahl von Rastbereichen, die jeweils ein Rastelement und ein Verriegelungselement umfassen.

Vorzugsweise ist in die Lenkradanordnung ein floating-horn-Mechanismus integriert. Insbesondere ist das Airbagmodul mit einer Kontaktbrücke verbunden, an welcher das Rastelement angebracht ist und welche in der Montagestellung des Airbagmoduls zwischen dem Airbagmodul und dem Lenkrad angeordnet ist. Im Rahmen der vorliegenden Erläuterung der Erfindung kann die Kontaktbrücke als ein Bestandteil des Airbagmoduls angesehen werden.

Vorzugsweise ist das Airbagmodul am Lenkrad elastisch gelagert. Ein oder mehrere elastische Lagerelemente können dabei entweder am Airbagmodul oder am Lenkrad angeordnet sein.

Ferner ist bevorzugt vorgesehen, dass zur horizontalen Positionierung des Airbagmoduls am Lenkrad in einer senkrecht zur Lenkradachse verlaufenden Ebene Positionierhilfen vorgesehen sind.

Bei der Feder handelt es sich vorzugsweise um eine Schenkelfeder. Die Feder kann eine U-Form aufweisen. Vorzugsweise spannen Schenkel der Feder eine senkrecht zur Lenkradachse orientierte Ebene auf. Das Rastelement ist in der Montagestellung des Airbagmoduls bevorzugt zwischen Schenkeln der Feder hindurchgeführt. Beim Einführen des Rastelements kann lediglich ein Schenkel oder können beide Schenkel ausgelenkt werden. Alternativ kann das Rastelement auch seitlich außen an einem der Schenkel vorbeigeführt werden, so dass nur dieser Schenkel ausgelenkt wird. Ferner wird erfindungsgemäß vorgeschlagen, dass das Rastelement in der Montagestellung von einem Schenkel der Feder verriegelnd hintergriffen ist.

Ein das Rastelement in der Montagestellung verriegelnd hintergreifender Federschenkel ist vorzugsweise insbesondere mit seinem freien Endbereich am Lenkrad gesichert, bevorzugt durch Hintergreifen oder Untergreifen eines Sicherungsabschnitts des Lenkrades.

Die Feder kann sich über eine Vertiefung hinweg erstrecken, die im Lenkrad, insbesondere in einem Nabenteller des Lenkrades, zur Aufnahme des Rastelementes ausgebildet ist.

Vorzugsweise ist einer der Federschenkel relativ zum Lenkrad unbeweglich.

In einem bevorzugten Ausführungsbeispiel der Erfindung ist die Feder ohne zusätzliche Befestigungsmittel am Lenkrad fixiert, und zwar zumindest in Richtung der Lenkradachse (z-Richtung), vorzugsweise auch senkrecht zur Lenkradachse. Hierdurch werden Herstellung und Montage der Lenkradanordnung erheblich vereinfacht.

Bevorzugt ist die Feder in Richtung der Lenkradachse ausschließlich durch wenigstens einen am Lenkrad, insbesondere an einem Nabenteller, ausgebildeten Sicherungsabschnitt gesichert ist, wobei bevorzugt der Sicherungsabschnitt brückenartig ausgebildet ist. Dabei kann die Feder zur Montage am Lenkrad senkrecht zur Lenkradachse unter den Sicherungsabschnitt schiebbar oder steckbar sein.

Des Weiteren kann die Feder senkrecht zur Lenkradachse durch wenigstens einen am Lenkrad, insbesondere an einem Nabenteller, ausgebildeten Sicherungsabschnitt gesichert sein, wobei bevorzugt im gesicherten Zustand die Feder mit dem Sicherungsabschnitt verrastet ist und/oder der Sicherungsabschnitt von der Feder hintergriffen ist.

Schenkel der Feder können eine unterschiedliche Länge aufweisen, wobei dann vorzugsweise der längere Federschenkel dem Lenkradinneren zugewandt ist. Dabei ist insbesondere das Rastelement in der Montagestellung des Airbagmoduls von dem längeren Federschenkel hintergriffen.

Die Feder ist bevorzugt im Bereich eines U-Bogens am Lenkrad, vorzugsweise an einem Nabenteller des Lenkrades, fixiert. Zur Fixierung der Feder am Lenkrad dient vorzugsweise eine Schraubverbindung, wobei bevorzugt die Schraubverbindung zwischen Schenkeln der Feder hindurchgeführt ist.

Die Feder kann zwischen dem Lenkrad und einem Halteelement festgehalten sein, das mittels einer Befestigungsschraube am Lenkrad befestigt ist. Das Haltelement ist vorzugsweise brückenartig ausgebildet. Dabei kann vorgesehen sein, dass das Lenkrad und das Halteelement einen Positioniertunnel für zumindest einen Teil der Feder bilden. Das Halteelement kann sich quer zu Schenkeln der Feder über die Feder hinweg erstrecken und die Federschenkel seitlich außen umgreifen. Im Bereich des Halteelementes kann das Lenkrad einen Positioniervorsprung aufweisen, auf den die Feder aufgesteckt oder aufgeschoben ist.

Ferner wird erfindungsgemäß vorgeschlagen, dass am Lenkrad, vorzugsweise an einem Nabenteller des Lenkrades, eine Demontageöffnung vorgesehen ist, über welche der Schnellrastmechanismus mittels eines Werkzeugs entriegelbar ist. Die Demontageöffnung kann unterhalb eines Sicherungsabschnitts für die Feder gelegen und während der Lenkradherstellung bei der Erzeugung des Sicherungsabschnitts gebildet sein.

Die Erfindung wird im Folgenden beispielhaft unter Bezugnahme auf die Zeichnung beschrieben. Es zeigen:
- Fig. 1: eine perspektivische Teilansicht eines Rastmechanismus an einer Lenkradanordnung gemäß der Erfindung,
- Fig. 2: schematisch in einer Draufsicht die Anordnung einer Verriegelungsfeder an einem Lenkrad gemäß der Erfindung,
- Fig. 3: die Anordnung von Fig. 2 in einer geschnittenen Seitenansicht, und
- Fig. 4-6: weitere Ausführungsbeispiele der Erfindung.

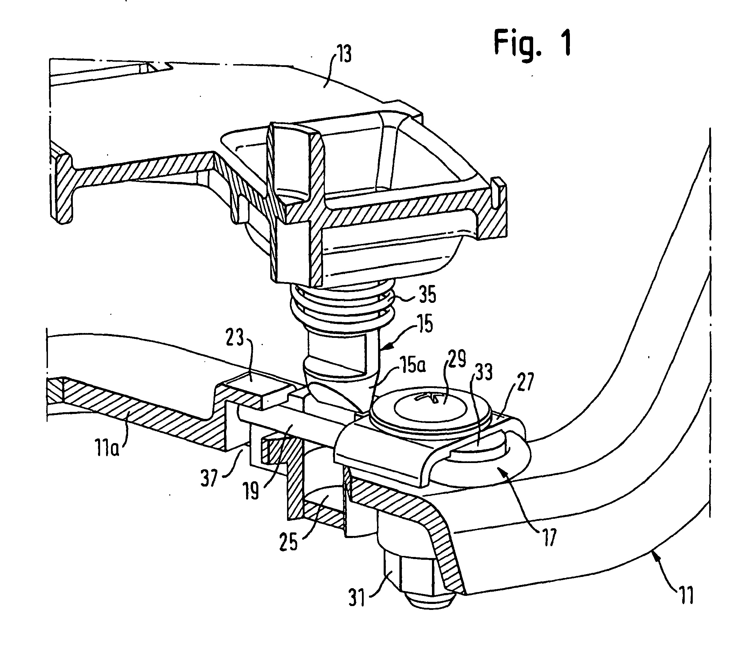

Erfindungsgemäß sind an einer einen Bestandteil eines Airbagmoduls bildenden Kontaktbrücke 13 mehrere Rasthaken 15 integral ausgebildet. Die Kontaktbrücke 13 einschließlich der Rasthaken 15 ist ein Kunststoffspritzgussteil. Fig. 1 zeigt von dem erfindungsgemäßen Schnellrastmechanismus lediglich einen Rastabschnitt, der den Rasthaken 15 sowie eine Verriegelungsfeder 17 umfasst, die mittels einer Schraubverbindung aus Schraube 29 und Mutter 31 an einem Nabenteller 11a eines Lenkrades 11 befestigt ist. Dabei ist die Feder 17 auf der der Kontaktbrücke 13 zugewandten Oberseite des Nabentellers 11a angeordnet. Der Rastmechanismus umfasst eine Mehrzahl derartiger Rastabschnitte, die jeweils im Randbereich des Nabentellers 11a des Lenkrades 11 gelegen sind.

Zur Fixierung der Feder 17 in einer Sollposition auf dem Nabenteller 11a sind außerdem ein separates, als Sicherungsscheibe dienendes und brückenartig ausgebildetes Halteelement 27 sowie ein integral am Lenkrad 11 ausgebildeter Positioniervorsprung 33 vorgesehen.

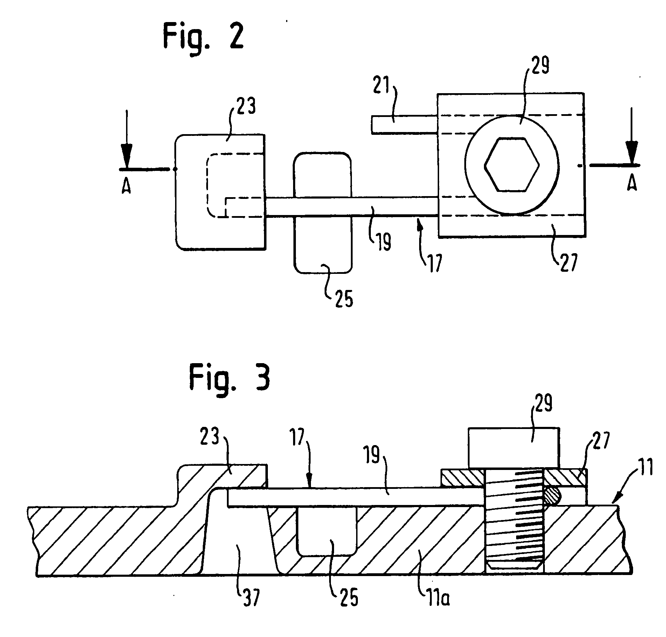

Die Feder 17 ist eine U-förmige Schenkelfeder mit zwei im am Lenkrad 11 montierten Zustand parallelen, unterschiedlich langen (vgl. Fig. 2) Schenkeln 19, 21. Mit ihrem U-Bogen sitzt die Feder 17 auf dem Positioniervorsprung 33, dessen Breite dem Innenabstand der Federschenkel 19, 21 entspricht. Die relativ kurzen Schenkel des die Federschenkel 19, 21 seitlich außen umgreifenden Sicherungselementes 27 besitzen einen Innenabstand, der dem Außenabstand der Federschenkel 19, 21 entspricht.

Lenkrad 11 und Halteelement 27 bilden somit eine Art Tunnel zur Positionierung der Feder 17, deren U-Bogen zum überwiegenden Teil außerhalb dieses Tunnels gelegen ist.

Somit ist die Feder 17 in einer eindeutig definierten Lage relativ zum Lenkrad 13 positioniert und durch das mittels der Schraubverbindung 29, 31 am Lenkrad 13 fixierte Halteelement 27 in dieser Position am Lenkrad 11 parallel und senkrecht zur Lenkradachse, die parallel zum Rasthaken 15 verläuft, gesichert.

Der längere Federschenkel 19 erstreckt sich vollständig über eine im Nabenteller 11a ausgebildete Vertiefung 25 hinweg und ist mit seinem freien Ende unter einem brückenartigen Sicherungsabschnitt 23 des Nabentellers 11a gegen eine Auslenkung nach oben, d.h. in Richtung des Airbagmoduls bzw. der Kontaktbrücke 13, und damit in Demontagerichtung gesichert. Der kürzere Federschenkel 21 erstreckt sich so weit über die Vertiefung 25, dass der Rasthaken 15 in der Montagestellung, auf die nachstehend näher eingegangen wird, zwischen den beiden Federschenkeln 19, 21 hindurch in die Vertiefung 25 hineinragt.

Die beiden Federschenkel 19, 21 spannen eine Ebene auf, die senkrecht zur Lenkradachse und damit zur Längsachse der Rasthaken 15 verläuft.

Zur Montage eines mit der Kontaktbrücke 13 verbundenen Airbagmoduls am Lenkrad 11 brauchen lediglich die Rasthaken 15 in die am Nabenteller 11a ausgebildeten Vertiefungen 25 eingeführt zu werden. Mit ihrem am freien Ende ausgebildeten verbreiterten Rastfuß 15a drücken die Rasthaken 15 während der parallel zur Lenkradachse verlaufenden Montagebewegung jeweils die Schenkel 19, 21 der Federn 17 auseinander, bis bei Erreichen einer durch die Konstruktion vorgegebenen Einführtiefe die Federn 17 von selbst in die ursprüngliche Verriegelungsstellung zurückspringen und jeweils der längere Federschenkel 19 den Rastfuß 15a des Rasthakens 15 verriegelnd hintergreift ("Snap-In"-Prinzip).

Zur Demontage werden die Rasthaken 15 jeweils durch eine im Nabenteller 11a vorgesehene Entriegelungsöffnung mittels eines entsprechend ausgebildeten Werkzeugs, mit dem die Federschenkel 19, 21 auseinander gedrückt werden können, entriegelt, so dass das Airbagmodul 13 abgenommen werden kann.

Je nach Ausgestaltung der Feder 17 und deren Anordnung auf dem Lenkrad 11 bzw. dem Nabenteller 11a wird beim Eindrücken der Rasthaken 15 entweder nur einer der beiden Federschenkel 19, 21 oder werden beide Federschenkel 19, 21 senkrecht zur Einsteckrichtung ausgelenkt.

Auf den Rasthaken 15 sind Federn 35 angeordnet, über welche die Kontaktbrücke 13 bzw. das Airbagmodul in der verrasteten Montagestellung elastisch auf dem Lenkrad 11 bzw. dem Nabenteller 11a gelagert ist.

Über diese Federn 35 und gegebenenfalls zusätzliche oder andere elastische Elemente kann eine Vorspannung der am Lenkrad 11 elastisch gelagerten Kontaktbrücke 13 bzw. Airbagmoduls gezielt vorgegeben werden.

Die erfindungsgemäße Anordnung der Federn 17 auf der Oberseite des Lenkrades 11 bzw. Nabentellers 11a ermöglicht im Gegensatz zu einer Verrastung unterhalb des Nabentellers 11a eine vorteilhafte Reduzierung störender Toleranzen.

Das erfindungsgemäße Lenkradmodul umfasst einen nicht in allen Einzelheiten dargestellten floating-horn-Mechanismus: Zum Betätigen der Fahrzeughupe wird das mit dem Lenkrad 11 verrastete Airbagmodul in Richtung der Lenkradachse relativ zum Lenkrad 11 nach unten und damit gegen die Kontaktbrücke 13 gedrückt, wodurch Hupenkontakte betätigt werden. Die hierfür erforderliche Bewegbarkeit des Airbagmoduls relativ zum Lenkrad 11 erfordert eine exakte Positionierung des Airbagmoduls in einer horizontalen Ebene, d.h. in einer Ebene senkrecht zur Lenkradachse sowie minimale Passtoleranzen, um die geforderten Spaltmaße exakt einzuhalten. Diese Anforderungen können mit dem erfindungsgemäßen Schnellrastmechanismus auf einfache Weise erfüllt werden.

Die Fig. 2 und 3 zeigen eine Variante, die sich von der Ausführung gemäß Fig. 1 u.a. dadurch unterscheidet, dass der kürzere Federschenkel 21 sich nicht über die Vertiefung 25 für den nicht dargestellten Rasthaken hinweg erstreckt. Zur Montage des Airbagmoduls wird folglich lediglich der - über sein freies Ende mittels eines Sicherungsabschnittes 23 des Nabentellers 11a gesicherte - längere Federschenkel 19 ausgelenkt. Bei der Auslenkung des hinsichtlich seiner Biegesteifigkeit entsprechend ausgelegten Federschenkels 19 stützt sich der Rasthaken 15 an der entsprechenden Seitenwand der Vertiefung 25 ab. Mit seinem um 90° nach unten abgewinkelten freien Ende ist der kürzere Federschenkel 21 am Nabenteller 11 a senkrecht zur Einsteckrichtung des Rasthakens gesichert.

Für die Befestigungsschraube 29 ist - anders als bei der Variante von Fig. 1 - keine Mutter vorgesehen, sondern die Schraube 29 ist direkt in den Nabenteller 11a eingeschraubt. Des Weiteren liegt der U-Bogen der Feder 17 vollständig unterhalb der die Feder 17 in Position haltenden und mittels der Schraube 29 am Lenkrad 11 fixierten Sicherungsscheibe 27.

Der Raum unterhalb des Sicherungsabschnittes 23 ist jeweils von unten zugänglich und wird als Demontageöffnung 37 zur Entriegelung der Feder 17 und damit zur Freigabe des Rasthakens 15 genutzt. Bei der Bildung der Sicherungsabschnitte 23 während der Lenkrad- bzw. Nabentellerherstellung werden die Demontageöffnungen mit ausgebildet.

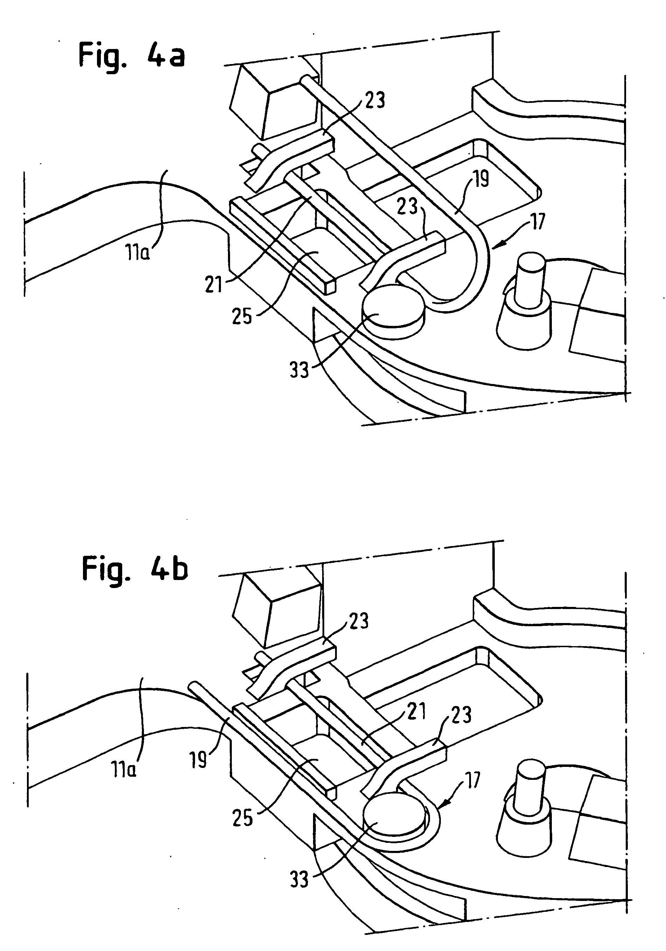

Die Fig. 4 - 6 zeigen weitere Varianten der Erfindung, die sich unter anderem dadurch auszeichnen, dass zur Anbringung der Feder 17 auf dem Nabenteller 11a keine separaten Befestigungsmittel erforderlich sind, sondern die Feder 17 alleine durch bei der Herstellung erzeugte Ausgestaltungen des Nabentellers 11a in ausreichender Weise gesichert wird, und zwar insbesondere in Richtung der Lenkradachse (z-Richtung), um eine sichere Verriegelungsfunktion für den Rasthaken 15 des Airbagmoduls 13 zu gewährleisten.

Gemäß Fig. 4a und 4b sind zur Sicherung einer U-förmigen Feder 17 mit gleich langen Schenkeln 19, 21 auf dem Nabenteller 11a zwei hakenartige Sicherungsabschnitte 23 ausgebildet. Zur Montage wird die Feder 17 mit einem Schenkel 21 unter die Haken 23 geschoben oder gehakt (Fig. 4a) und dann auf den Nabenteller 11a geschwenkt (Fig. 4b). Die Positionierung der Feder 17 wird durch einen zapfenförmigen Positionierungsvorsprung 33 im U-Bogen der Feder 17 erleichtert.

Der nicht dargestellte, im zusammengesetzten Zustand in die Vertiefung 25 hineinragende Rasthaken des Airbagmoduls wirkt mit dem untergehakten Federschenkel 21 zusammen, der beim Einführen des Rasthakens in die Vertiefung 25 seitlich ausgelenkt wird und aufgrund seiner Sicherung durch die Abschnitte 23 den Rasthaken verriegelnd am Lenkrad 11 bzw. am Nabenteller 11a festhält.

Lenkräder werden häufig umschäumt. Dies kann hier ausgenutzt werden, um die Feder 17 zumindest teilweise einzuschäumen und so in ihrer Funktionsstellung gemäß Fig. 4b zu sichern, d.h. um ein unerwünschtes Hochschwenken oder Herausziehen der Feder 17 zu verhindern.

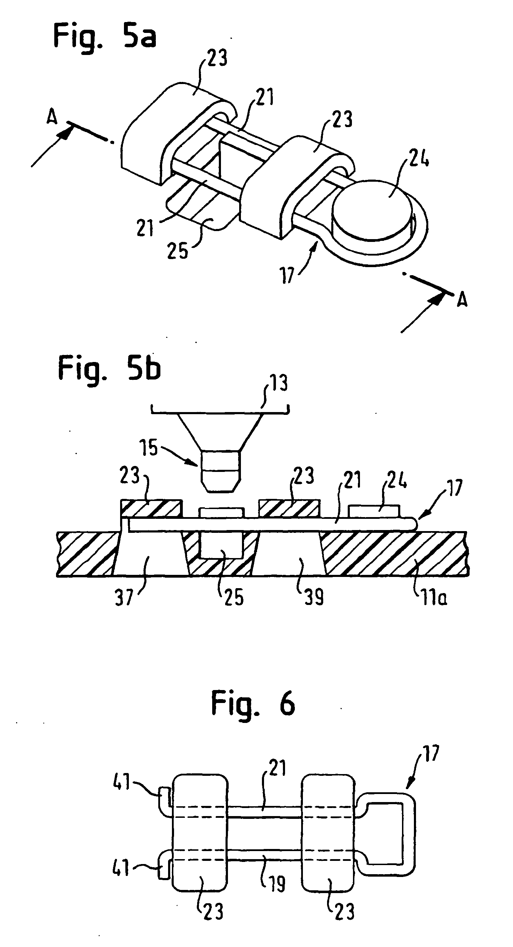

Die Fig. 5a, 5b und 6 zeigen erfindungsgemäße Variante, bei denen jeweils brückenartige Sicherungsabschnitte 23 für die Feder 17 vorgesehen sind. Anders als bei der Variante gemäß Fig. 4 wird hier die Feder 17 also nicht seitlich eingehängt oder untergehakt, sondern jeweils senkrecht zur Lenkradachse unter die Sicherungsbrücken 23 geschoben.

In dem Beispiel der Fig. 5a, 5b dient als Herausziehsicherung für die Feder 17 ein zylindrischer Sicherungsabschnitt 24 des Lenkrades 11 bzw. des Nabentellers 11a, dessen Durchmesser größer ist als der Abstand zwischen den Federschenkeln 19, 21 und der am Ende des Aufschiebevorgangs im U-Bogen der Feder 17 einrastet.

Außerdem wird hier der Rasthaken 15 außen seitlich am Federschenkel 21 vorbei in die Vertiefung 25 geführt und nicht zwischen den Schenkeln 19, 21 hindurch.

In dem Beispiel der Fig. 6 sind nach außen abgewinkelte Verriegelungsabschnitte 41 an den freien Enden der Federschenkel 19, 21 als Herausziehsicherung für die Feder 17 vorgesehen. Beim Einführen der Feder 17 unter die Sicherungsbrücken 23 werden die Schenkel 19, 21 daher zusammengedrückt. Die in Fig. 6 linke Brücke 23 dient somit gleichzeitig als Federsicherung in z-Richtung als auch senkrecht zur z-Richtung.

Über die Öffnung 37 unterhalb der linken Brücke 23 (vgl. Fig. 5b) sind die Federschenkel 19, 21 von unten zugänglich, um die Feder 17 zu entriegeln und den Rasthaken 15 freizugeben. Diese Demontageöffnung 37 sowie die Öffnung 39 unterhalb der rechten Brücke 23 werden bei der Druckgussherstellung des Lenkrades 11 bzw. des Nabentellers 11a mit ausgebildet.

### Bezugszeichenliste

- 11: Lenkrad
- 11a: Nabenteller
- 13: Airbagmodul, Kontaktbrücke
- 15: Rastelement, Rasthaken
- 15a: Rastfuß
- 17: Verriegelungselement, Feder
- 19: Federschenkel
- 21: Federschenkel
- 23: Sicherungsabschnitt des Lenkrades
- 24: Sicherungsabschnitt des Lenkrades
- 25: Vertiefung für Rasthaken
- 27: Halteelement, Sicherungsscheibe
- 29: Schraube
- 31: Mutter
- 33: Positioniervorsprung
- 35: elastisches Element, Feder
- 37: Demontageöffnung
- 39: Herstellungsöffnung
- 41: Verriegelungsabschnitt

## Patentansprüche

1. Lenkradanordnung für Kraftfahrzeuge
mit einem Lenkrad (11) und einem Airbagmodul (13), das mit dem Lenkrad (11) lösbar verbindbar ist,
wobei zur einfachen Montage und Demontage des Airbagmoduls (13) ein Schnellrastmechanismus vorgesehen ist, der wenigstens ein sich parallel zur Lenkradachse erstreckendes Rastelement (15) und ein Verriegelungselement (17) umfasst, das in der Montagestellung des Airbagmoduls (13) das Rastelement (15) verriegelnd hintergreift,
wobei das Rastelement (15) am Airbagmodul (13) angebracht und das Verriegelungselement (17) am Lenkrad (11) fixiert ist,
wobei als Verriegelungselement eine senkrecht zur Lenkradachse orientierte Feder (17) vorgesehen ist, die bei einer in Richtung der Lenkradachse erfolgenden Relativbewegung zwischen Airbagmodul (13) und Lenkrad (11) mittels des Rastelementes (15) aus einer Verriegelungsstellung auslenkbar ist und bei Erreichen der Montagestellung des Airbagmoduls (13) von selbst in die Verriegelungsstellung zurückkehrt, und
wobei die Feder (17) an der dem Airbagmodul (13) zugewandten Oberseite des Lenkrades (11) angeordnet ist,
**dadurch gekennzeichnet ,**
**dass** Federschenkel (19,21) mittels des Rastelementes (15) auseinander drückbar sind.

2. Lenkradanordnung nach Anspruch 1,
**dadurch gekennzeichnet,**
**dass** die Feder (17) auf einem Nabenteller (11a) des Lenkrades (11) angeordnet ist.

3. Lenkradanordnung nach Anspruch 1 oder 2,
**dadurch gekennzeichnet,**
**dass** die Feder (17) eine Schenkelfeder ist.

4. Lenkradanordnung nach einem der vorhergehenden Ansprüche,
**dadurch gekennzeichnet,**
**dass** die Feder (17) eine U-Form aufweist.

5. Lenkradanordnung nach einem der vorhergehenden Ansprüche,
**dadurch gekennzeichnet,**
**dass** Federschenkel (19, 21) eine senkrecht zur Lenkradachse orientierte Ebene aufspannen.

6. Lenkradanordnung nach einem der vorhergehenden Ansprüche,
**dadurch gekennzeichnet,**
**dass** das Rastelement (15) in der Montagestellung des Airbagmoduls (13) zwischen Federschenkeln (19, 21) hindurchgeführt ist.

7. Lenkradanordnung nach einem der vorhergehenden Ansprüche,
**dadurch gekennzeichnet,**
**dass** das Rastelement (15) in der Montagestellung von einem Federschenkel (19) verriegelnd hintergriffen ist.

8. Lenkradanordnung nach einem der vorhergehenden Ansprüche,
**dadurch gekennzeichnet,**
**dass** ein das Rastelement (15) in der Montagestellung verriegelnd hintergreifender Federschenkel (19) insbesondere mit seinem freien Endbereich am Lenkrad (11) gesichert ist, vorzugsweise durch Untergreifen eines Sicherungsabschnitts (23) des Lenkrades (11).

9. Lenkradanordnung nach einem der vorhergehenden Ansprüche,
**dadurch gekennzeichnet,**
**dass** die Feder (17) sich über eine Vertiefung (25) hinweg erstreckt, die im Lenkrad (11), insbesondere in einem Nabenteller (11a) des Lenkrades (11), zur Aufnahme des Rastelementes (15) ausgebildet ist.

10. Lenkradanordnung nach einem der vorhergehenden Ansprüche,
**dadurch gekennzeichnet,**
**dass** einer der Federschenkel (19, 21) relativ zum Lenkrad (11) unbeweglich ist.

11. Lenkradanordnung nach einem der vorhergehenden Ansprüche,
**dadurch gekennzeichnet,**
**dass** die Feder (17) in Richtung der Lenkradachse ausschließlich durch wenigstens einen am Lenkrad (11), insbesondere an einem Nabenteller (11a), ausgebildeten Sicherungsabschnitt (23) gesichert ist, wobei bevorzugt der Sicherungsabschnitt (23) brückenartig ausgebildet ist.

12. Lenkradanordnung nach Anspruch 11,
**dadurch gekennzeichnet,**
**dass** die Feder (17) zur Montage am Lenkrad (11) senkrecht zur Lenkradachse unter den Sicherungsabschnitt (23) schiebbar oder steckbar ist.

13. Lenkradanordnung nach einem der vorhergehenden Ansprüche,
**dadurch gekennzeichnet,**
**dass** die Feder (17) senkrecht zur Lenkradachse durch wenigstens einen am Lenkrad (11), insbesondere an einem Nabenteller (11a), ausgebildeten Sicherungsabschnitt (23, 24) gesichert ist, wobei bevorzugt im gesicherten Zustand die Feder (17) mit dem Sicherungsabschnitt (24) verrastet ist und/oder der Sicherungsabschnitt (23) von der Feder (17) hintergriffen ist.

14. Lenkradanordnung nach einem der vorhergehenden Ansprüche,
**dadurch gekennzeichnet,**
**dass** die Feder (17) im Bereich eines U-Bogens am Lenkrad (11) fixiert ist.

15. Lenkradanordnung nach einem der vorhergehenden Ansprüche,
**dadurch gekennzeichnet,**
**dass** die Feder (17) durch eine Schraubverbindung (29, 31) am Lenkrad (11) fixiert ist, vorzugsweise an einem Nabenteller (11a) des Lenkrades (11), wobei bevorzugt die Schraubverbindung (29, 31) zwischen Federschenkeln (19, 21) hindurchgeführt ist.

16. Lenkradanordnung nach einem der vorhergehenden Ansprüche,
**dadurch gekennzeichnet,**
**dass** die Feder (17) zwischen dem Lenkrad (11) und einem Halteelement (27) festgehalten ist, das mittels einer Befestigungsschraube (29) am Lenkrad (11) befestigt ist, wobei vorzugsweise das Halteelement (27) brückenartig ausgebildet ist.

17. Lenkradanordnung nach Anspruch 16,
**dadurch gekennzeichnet,**
**dass** sich das Halteelement (27) quer zu Federschenkeln (19, 21) über die Feder (17) hinweg erstreckt und die Federschenkel (19, 21) seitlich außen umgreift.

18. Lenkradanordnung nach Anspruch 16 oder 17,
**dadurch gekennzeichnet,**
**dass** das Lenkrad (11) im Bereich des Halteelementes (27) einen Positioniervorsprung (33) aufweist, auf den die Feder (17) aufgesteckt oder aufgeschoben ist.

19. Lenkradanordnung nach einem der vorhergehenden Ansprüche,
**dadurch gekennzeichnet,**
**dass** am Lenkrad (11), vorzugsweise an einem Nabenteller (11a) des Lenkrades (11), eine Demontageöffnung (37) vorgesehen ist, über welche der Schnellrastmechanismus mittels eines Werkzeugs entriegelbar ist.

20. Lenkradanordnung nach Anspruch 19,
**dadurch gekennzeichnet,**
**dass** die Demontageöffnung (37) unterhalb eines Sicherungsabschnitts (23) für die Feder (17) gelegen und während der Lenkradherstellung bei der Erzeugung des Sicherungsabschnitts (23) gebildet ist.

21. Lenkradanordnung nach einem der vorhergehenden Ansprüche,
**dadurch gekennzeichnet,**
**dass** das Rastelement (15) hakenartig ausgebildet ist.

22. Lenkradanordnung nach einem der vorhergehenden Ansprüche,
**dadurch gekennzeichnet,**
**dass** das Rastelement (15) an einer Kontaktbrücke (13) angebracht ist, die mit dem Airbagmodul verbunden und in der Montagestellung des Airbagmoduls zwischen dem Airbagmodul und dem Lenkrad (11) angeordnet ist.

23. Lenkradanordnung nach einem der vorhergehenden Ansprüche,
**dadurch gekennzeichnet,**
**dass** das Airbagmodul (13) am Lenkrad (11) elastisch gelagert ist.

24. Lenkradanordnung nach einem der vorhergehenden Ansprüche,
**dadurch gekennzeichnet,**
**dass** zur Positionierung des Airbagmoduls (13) am Lenkrad (11) in einer senkrecht zur Lenkradachse verlaufenden Ebene Positionierhilfen vorgesehen sind.

## Claims

1. A steering wheel arrangement for motor vehicles
comprising a steering wheel (11) and an airbag module (13) releasably connectable to the steering wheel (11),
wherein, for the simple assembly and dismantling of the airbag module (13), a quick-latch mechanism is provided which includes at least one latch element (15) extending parallel to the steering wheel axis and a lock element (17) which engages behind the latch element (15) in a locking manner in the installed position of the airbag module (13);
wherein the latch element (15) is attached to the airbag module (13) and the lock element (17) is fixed to the steering wheel (11);
wherein a spring (17) oriented perpendicular to the steering wheel axis is provided as the lock element and can be deflected from a lock position by means of the latch element (15) on a relative movement between the airbag module (13) and the steering wheel (11) taking place in the direction of the steering wheel axis and automatically returns into the lock position on the reaching of the installed position of the airbag module (13); and
wherein the spring (17) is arranged at the upper side of the steering wheel (11) facing the airbag module (13),
**characterized in that**
spring limbs (19, 21) can be pressed apart from one another by means of the latch element (15).

2. A steering wheel arrangement in accordance with claim 1, **characterized in that** the spring (17) is arranged on a hub plate (11a) of the steering wheel (11).

3. A steering wheel arrangement in accordance with claim 1 or claim 2, **characterized in that** the spring (17) is a limb spring.

4. A steering wheel arrangement in accordance with any one of the preceding claims, **characterized in that** the spring (17) has a U shape.

5. A steering wheel arrangement in accordance with any one of the preceding claims, **characterized in that** spring limbs (19, 21) form a plane oriented perpendicular to the steering wheel axis.

6. A steering wheel arrangement in accordance with any one of the preceding claims, **characterized in that** the latch element (15) is guided between spring limbs (19, 21) in the installed position of the airbag module (13).

7. A steering wheel arrangement in accordance with any one of the preceding claims, **characterized in that** the latch element (15) is engaged behind by a spring limb (19) in a locking manner in the installed position.

8. A steering wheel arrangement in accordance with any one of the preceding claims, **characterized in that** a spring limb (19) engaging behind the latch element (15) in a locking manner in the installed position is in particular secured at its free end region to the steering wheel (11), preferably by engaging behind a securing section (23) of the steering wheel (11).

9. A steering wheel arrangement in accordance with any one of the preceding claims, **characterized in that** the spring (17) extends beyond a recess (25) formed in the steering wheel (11), in particular in a hub plate (11a) of the steering wheel (11), for the reception of the latch element (15).

10. A steering wheel arrangement in accordance with any one of the preceding claims, **characterized in** one of the spring limbs (19, 21) is unmovable relative to the steering wheel (11) .

11. A steering wheel arrangement in accordance with any one of the preceding claims, **characterized in that** the spring (17) is secured in the direction of the steering wheel axis only by at least one securing section (23) formed at the steering wheel (11), in particular at a hub plate (11a), with the securing section (23) preferably being made in bridge-like form.

12. A steering wheel arrangement in accordance with claim 11, **characterized in that** the spring (17) is able to be pushed or plugged under the securing section (23) perpendicular to the steering wheel axis for the assembly at the steering wheel (11).

13. A steering wheel arrangement in accordance with any one of the preceding claims, **characterized in that** the spring (17) is secured perpendicular to the steering wheel axis by at least one securing section (23, 24) formed at the steering wheel (11), in particular at a hub plate (11a), with the spring (17) preferably being latched to the securing section (24) in the secured state and/or the securing section (23) being engaged behind by the spring (17).

14. A steering wheel arrangement in accordance with any one of the preceding claims, **characterized in that** the spring (17) is fixed to the steering wheel (11) in the region of a U arch.

15. A steering wheel arrangement in accordance with any one of the preceding claims, **characterized in that** the spring (17) is fixed to the steering wheel (11), preferably to a hub plate (11a) of the steering wheel (11), by a screw connection (29, 31), with the screw connection (29, 31) preferably being guided between spring limbs (19,21).

16. A steering wheel arrangement in accordance with any one of the preceding claims, **characterized in that** the spring (17) is held tight between the steering wheel (11) and a holding element (27) which is secured to the steering wheel (11) by means of a fastening screw (29), with the holding element (27) preferably being made in bridge-like form.

17. A steering wheel arrangement in accordance with claim 16, **characterized in that** the holding element (27) extends beyond the spring (17) transversely to spring limbs (19, 21) and engages laterally outwardly around the spring limbs (19, 21).

18. A steering wheel arrangement in accordance with claim 16 or claim 17, **characterized in that**, in the region of the holding element (27), the steering wheel (11) has a positioning projection (33) onto which the spring (17) is plugged or pushed.

19. A steering wheel arrangement in accordance with any one of the preceding claims, **characterized in that** a dismantling opening (37) is provided at the steering wheel (11), preferably at a hub plate (11a) of the steering wheel (11), via which the quick-latch mechanism can be unlocked by means of a tool.

20. A steering wheel arrangement in accordance with claim 19, **characterized in that** the dismantling opening (37) is disposed beneath a securing section (23) for the spring (17) and is formed during the manufacture of the steering wheel on the production of the securing section (23).

21. A steering wheel arrangement in accordance with any one of the preceding claims, **characterized in that** the latch element (15) is made like a hook.

22. A steering wheel arrangement in accordance with any one of the preceding claims, **characterized in that** the latch element (15) is attached to a contact bridge (13) which is connected to the airbag module and is arranged between the airbag module and the steering wheel (11) in the installed position of the airbag module.

23. A steering wheel arrangement in accordance with any one of the preceding claims, **characterized in that** the airbag module (13) is resiliently supported at the steering wheel (11).

24. A steering wheel arrangement in accordance with any one of the preceding claims, **characterized in that** positioning aids are provided for the positioning of the airbag module (13) at the steering wheel (11) in a plane extending perpendicular to the steering wheel axis.

## Revendications

1. Agencement de volant de direction pour véhicules automobiles, comprenant un volant de direction (11) et un module de sac gonflable de sécurité (13) pouvant être relié de façon démontable au volant de direction (11),
un mécanisme de montage rapide par enclenchement étant prévu pour permettre un montage et un démontage faciles du module de sac gonflable de sécurité (13), mécanisme qui comprend au moins un élément d'enclenchement (15) s'étendant parallèlement à l'axe du volant de direction, et un élément de verrouillage (17) qui, dans la position de montage du module de sac gonflable de sécurité (13) s'engage derrière l'élément d'enclenchement (15) de manière à le verrouiller, l'élément d'enclenchement (15) étant disposé sur le module de sac gonflable de sécurité (13), et l'élément de verrouillage (17) étant fixé sur le volant de direction (11),
l'élément de verrouillage étant prévu sous forme d'un ressort (17) orienté perpendiculairement à l'axe du volant de direction, qui, lors d'un mouvement relatif entre le module de sac gonflable de sécurité (13) et le volant de direction (11) dans le sens de l'axe du volant de direction, peut être dévié hors d'une position de verrouillage au moyen de l'élément d'enclenchement (15), et qui, lorsqu'on atteint la position de montage du module de sac gonflable de sécurité (13), retourne de lui même dans la position de verrouillage, et
le ressort (17) étant disposé sur la face supérieure du volant de direction (11), qui est tournée vers le module de sac gonflable de sécurité,
**caractérisé en ce que** des branches (19, 21) du ressort peuvent être écartées l'une de l'autre au moyen de l'élément d'enclenchement (15).

2. Agencement de volant de direction selon la revendication 1, **caractérisé en ce que** le ressort (17) est disposé sur un plateau de moyeu (11a) du volant de direction (11).

3. Agencement de volant de direction selon la revendication 1 ou 2, **caractérisé en ce que** le ressort (17) est un ressort à branches.

4. Agencement de volant de direction selon l'une des revendications précédentes, **caractérisé en ce que** le ressort (17) présente une forme en U.

5. Agencement de volant de direction selon l'une des revendications précédentes, **caractérisé en ce que** des branches (19, 22) du ressort définissent un plan orienté perpendiculairement à l'axe du volant de direction.

6. Agencement de volant de direction selon l'une des revendications précédentes, **caractérisé en ce qu'**en position de montage du module de sac gonflable de sécurité (13), l'élément d'enclenchement (15) est engagé et passe entre des branches (19, 21) du ressort.

7. Agencement de volant de direction selon l'une des revendications précédentes, **caractérisé en ce qu'**en position de montage, l'élément d'enclenchement (15) est verrouillé par une branche (19) du ressort qui s'engage derrière celui-ci.

8. Agencement de volant de direction selon l'une des revendications précédentes, **caractérisé en ce qu'**une branche (19) du ressort, qui, en position de montage, s'engage derrière l'élément d'enclenchement (15), est fixée sur le volant de direction (11) notamment par sa partie terminale libre, de préférence grâce à un engagement sous une partie d'arrêt (23) du volant de direction (11).

9. Agencement de volant de direction selon l'une des revendications précédentes, **caractérisé en ce que** le ressort (17) s'étend par-dessus un renfoncement (25) qui est aménagé dans le volant de direction (11), en particulier dans un plateau de moyeu (11a) du volant de direction (11), en vue recevoir l'élément d'enclenchement (15).

10. Agencement de volant de direction selon l'une des revendications précédentes, **caractérisé en ce que** l'une des branches (19, 21) du ressort est immobile par rapport au volant de direction.

11. Agencement de volant de direction selon l'une des revendications précédentes, **caractérisé en ce que** le ressort (17) est fixé, dans la direction de l'axe du volant de direction, uniquement par au moins une section de fixation (23) formée sur le volant de direction (11), en particulier un plateau de moyeu (11a), la section de fixation (23) étant de préférence configurée en forme de pontet.

12. Agencement de volant de direction selon la revendication 11, **caractérisé en ce que**, pour être monté sur le volant de direction (11), le ressort (17) est peut être emmanché perpendiculairement à l'axe du volant de direction sous la section de fixation (23).

13. Agencement de volant de direction selon l'une des revendications précédentes, **caractérisé en ce que** le ressort (17) est retenu perpendiculairement à l'axe du volant de direction grâce à au moins une section de fixation (23, 24) formée sur le volant de direction (11), en particulier sur un plateau de moyeu (11a), le ressort (17) étant de préférence engagé par enclenchement dans la section de fixation (24), à l'état de fixation, et/ou le ressort (17) s'engageant sous la section de fixation (23).

14. Agencement de volant de direction selon l'une des revendications précédentes, **caractérisé en ce que** le ressort (17) est fixé sur le volant de direction (11) au niveau d'un arc en U.

15. Agencement de volant de direction selon l'une des revendications précédentes, **caractérisé en ce que** le ressort (17) est fixé sur le volant de direction (11), de préférence sur un plateau de moyeu (11a) du volant de direction (11), au moyen d'un montage à vis (29, 31), le montage à vis (29, 31) passant de préférence entre deux branches (19, 21) du ressort.

16. Agencement de volant de direction selon l'une des revendications précédentes, **caractérisé en ce que** le ressort (17) est retenu entre le volant de direction (11) et un élément de retenue (27) qui est fixé sur le volant de direction (11) au moyen d'une vis de fixation (29), l'élément de retenue (27) étant de préférence configuré en forme de pontet.

17. Agencement de volant de direction selon la revendication 16, **caractérisé en ce que** l'élément de retenue (27) s'étend transversalement aux branches (19, 21) du ressort, par-dessus le ressort (17), et englobe les branches (19, 21) du ressort latéralement à l'extérieur.

18. Agencement de volant de direction selon les revendications 16 ou 17, **caractérisé en ce que** le volant de direction (11) comporte, au niveau de l'élément de retenue (27), une saillie de positionnement (33) sur laquelle est emboîté ou glissé le ressort (17).

19. Agencement de volant de direction selon l'une des revendications précédentes, **caractérisé en ce qu'**une ouverture de démontage (37) est prévue dans le volant de direction (11), de préférence dans un plateau de moyeu (11a) du volant de direction (11), à travers laquelle le mécanisme de montage rapide par enclenchement peut être déverrouillé à l'aide d'un outil.

20. Agencement de volant de direction selon la revendication 19, **caractérisé en ce que** l'ouverture de démontage (37) se situe en dessous d'une section de fixation (23) pour le ressort (17) et est formée pendant la fabrication du volant de direction, lors de la création de la section de fixation (23).

21. Agencement de volant de direction selon l'une des revendications précédentes, **caractérisé en ce que** l'élément d'enclenchement (15) est configuré en forme de crochet.

22. Agencement de volant de direction selon l'une des revendications précédentes, **caractérisé en ce que** l'élément d'enclenchement (15) est disposé sur un pontet de contact (13) qui est relié au module de sac gonflable de sécurité et qui, dans une position de montage du module de sac gonflable de sécurité, est disposé entre le module de sac gonflable de sécurité et le volant de direction (11).

23. Agencement de volant de direction selon l'une des revendications précédentes, **caractérisé en ce que** le module de sac gonflable de sécurité (13) est monté de façon élastique sur le volant de direction (11).

24. Agencement de volant de direction selon l'une des revendications précédentes, **caractérisé en ce que** des aides de positionnement sont prévues dans un plan s'étendant perpendiculairement à l'axe du volant de direction, pour positionner le module de sac gonflable de sécurité (13) sur le volant de direction (11).
